# FASCICULE DE BREVET EUROPEEN

(11) **EP 2 176 382 B1**
(45) Date de publication et mention de la délivrance du brevet: **14.09.2011**
(21) Numéro de dépôt: 08832709.3
(22) Date de dépôt: 18.07.2008
(51) Int. Cl.: C10G 49/04, C10G 49/12, C10G 3/00, C10L 1/02

(54) **PROCEDE D' HYDROCONVERSION EN LIT BOUILLONNANT DE CHARGES D'ORIGINE BIO-RENOUVELABLE POUR LA PRODUCTION DE BASES CARBURANTS**
HYDROKONVERSIONSVERFAHREN IN EINEM WIRBELBETT MIT BIOLOGISCH ERNEUERBAREN LADUNGEN ZUR HERSTELLUNG VON BRENNSTOFFMISCHUNGEN
HYDROCONVERSION METHOD IN A BUBBLING BED WITH BIORENEWABLE CHARGES FOR THE PRODUCTION OF FUEL STOCKS

(30) Priorité: 25.07.2007 FR 0705444
(43) Date de publication de la demande: 21.04.2010
(73) Titulaire: IFP Energies nouvelles, 92852 Rueil-Malmaison Cedex (FR)
(72) Inventeur: DAUDIN, Antoine, F-69960 Corbas (FR); DUPASSIEUX, Nathalie, F-69005 Lyon (FR); CHAPUS, Thierry, F-69001 Lyon (FR); QUIGNARD, Alain, F-38150 Roussillon (FR)
(86) Numéro de dépôt international: PCT/FR2008/001065
(87) Numéro de publication internationale: WO 2009/037400

(56) Documents cités:
- EP-A- 0 177 102
- EP-A- 1 693 432
- EP-A- 1 741 767
- WO-A-2008/020048
- US-A- 3 705 850
- US-A- 4 992 605
- US-B1- 6 436 279

## Description

### Domaine de l'invention

La présente invention concerne un procédé d'hydrotraitement et/ou d'hydroconversion d'une charge constituée d'un mélange d'huiles brutes d'origine végétale ou animale.

Dans un contexte marqué par la croissance rapide en besoin de carburants, en particulier de bases gazoles dans l'Union Européenne, associé au prix élevé des ressources fossiles, le développement de technologies et de systèmes énergétiques durables pour le secteur des transports devient une priorité.

Ainsi, l'intégration dans le processus de raffinage de nouveaux produits d'origine végétale, issus de la conversion de la biomasse ligno-cellulosique ou issus de la production d'huiles végétales ou de graisses animales, a connu ces dernières années un très vif regain d'intérêt.

De même, l'expérience d'incorporation d'esters méthyliques d'huiles végétales (EMHV) dans le gazole, ou d'éthanol incorporé directement ou sous forme d'ETBE dans les essences s'avère globalement satisfaisante, de sorte que la position de l'industrie pétrolière à l'égard des biocarburants a évolué positivement.

Leur production est notamment soutenue par la directive européenne sur l'incorporation de biocarburants (2003/30/CE) à un minimum de 2% en 2005, 5,75% en 2010 et 8% en 2015 des consommations globales d'essence et de gazole utilisés pour les transports.

Cependant, ce type de procédé est relativement coûteux et les produits obtenus dans le cas des EMHV possèdent des caractéristiques qui peuvent être pénalisantes, parmi lesquelles on peut citer : des propriétés à froid limitées, des indices de cétane atteignant tout juste les spécifications , un intervalle de distillation assez élevé et très étroit.

Une autre voie permet d'obtenir des bases carburants à partir d'huiles végétales et de graisses animales. Elle consiste en la transformation catalytique et directe des huiles par hydrogénation totale des triglycérides en présence d'un catalyseur d'hydroconversion. Les triglycérides sont alors convertis en paraffines, constituant alors d'excellentes bases carburants, et en particulier des bases gazoles d'indice de cétane très élevé.

Plusieurs brevets font référence à ce domaine. Les brevets US 4,992,605 et US 5,705,722 ont trait à la production de bases gazoles obtenues par hydrotraitement direct en réacteur de type lit fixe d'huiles végétales (huiles de colza, de soja, de tournesol, de palme, de pin).

Par ailleurs, le brevet EP 1,728,844 divulgue un procédé d'hydrotraitement d'huiles végétales et/ou de graisses animales brutes ainsi que d' huiles dérivées de l'industrie du bois pour lequel l'étape d'hydrotraitement est précédée d'une étape de pré-traitement de la charge afin d'éliminer au moins une partie des métaux présents (P, Mg, Na, Ca, Fe, K) à l'aide d'une résine échangeuse d'ions telle que l'Amberlyste-15 ou encore par un lavage acide. La charge ainsi purifiée est hydrotraitée dans un réacteur à lit fixe. Les produits obtenus sont des hydrocarbures paraffiniques avec un indice de cétane très élevé.

Dans le brevet EP 0,177,102 dédié à l'utilisation pour l'hydroconversion de fractions pétrolières d'un catalyseur, il est mentionné que l'utilisation en lit fixe ou en lit bouillonnant pour les réactions de désulfuration, déazotation, hydrocraquage de fractions pétrolières et il est cité l'hydrogénation d'huiles végétales et animales sans description précise. Il s'agit d'un catalyseur de type sulfure Mo ou W (11-18% poids) promus par Co ou Ni (3 - 4% poids) supporté sur alumine et/ou silice, avec ajout d'un oxyde métallique (ZnO, MgO, CaO).

D'autres procédés opèrent avec un catalyseur dispersé (slurry ou lit fluidisé). L'invention n'opère pas selon ces modes.

Le procédé selon la présente invention permet la production, à partir d'une charge d'origine bio-renouvelable de type huile végétale ou animale et contenant des structures triglycérides et/ou acides gras et dont les chaînes grasses possèdent généralement un nombre de carbone compris entre 8 et 25, de bases carburants présentant de très bonnes propriétés, notamment en termes de propriétés de combustion (indice de cétane, point de fumée), de stabilité thermique et de stockage, avec un catalyseur dépourvu de Zn, Mg, Ca.

La demanderesse a en particulier découvert que la mise en oeuvre de l'hydrotraitement et/ou de l'hydroconversion en lit bouillonnant permettait de s'affranchir des problèmes de contamination du catalyseur liés à la formation d'eau et d'oxydes de carbone par les réactions d'hydrodéoxygénation et aux dépôts d'impuretés (phospholipides, sérols, métaux, acides gras libres, etc...) présentes naturellement dans les huiles et notamment dans les huiles brutes. Ces problèmes de contamination du catalyseur sont particulièrement cruciaux pour une opération en réacteur de type lit fixe.

D'autre part, selon le procédé de l'invention, il est possible de traiter directement les huiles végétales et/ou graisses animales brutes (charge brute) sans avoir à mettre en oeuvre au préalable une étape supplémentaire et contraignante de purification.

### Objet de l'invention

La présente invention concerne un procédé d'hydrotraitement (HDT) et/ou d'hydroconversion (HDC) en lit bouillonnant, de charges d'origine bio-renouvelable, pour la production de bases carburants.

Les charges de départ sont issues de sources dites bio-renouvelables, telles les huiles végétales et graisses animales, ou des mélanges de telles charges en toutes proportions. On peut citer par exemple les huiles de colza, de soja, de tournesol, de palme, de palmiste, d'olive, de coprah, de ricin et de coton, les huiles d'arachides, de lin et de crambe, de Purghères (de jatropha). Cette liste non limitative inclut également toutes les huiles obtenues par modification génétique ou hybridation. Les huiles de friture, ainsi que toutes les huiles et graisses issues des industries de restauration, peuvent également être utilisées. Les graisses animales comme par exemple les huiles de poisson, le suif, le saindoux, font également partie des charges utilisées pour la présente invention. Les charges ainsi définies contiennent des structures triglycérides et/ou acides gras, dont les chaînes grasses possèdent un nombre de carbone généralement compris entre 8 et 25.

L'invention permet l'hydrotraitement et/ou l'hydroconversion de charges d'origine bio-renouvelable en bases carburants d'excellente qualité, notamment en termes de point de fumée des coupes kérosènes obtenues et d'indice de cétane des coupes gazoles qui est excellent, respectant les spécifications actuelles et futures les plus contraignantes.

Les hydrocarbures produits lors de la conversion sont obtenus soit par décarboxylation et/ou décarbonylation entraînant la perte d'un carbone par rapport à la chaîne grasse de départ, soit par hydrogénation/déshydratation permettant de convertir entièrement la chaîne hydrocarbonée. On peut aussi orienter la transformation vers le craquage, pour obtenir des produits de plus faible masse moléculaire comme le jet fuel voire de l'essence.

Le procédé en lit bouillonnant selon l'invention a pour objectif de maximiser le rendement en bases carburants en une étape, avantageusement sans prétraitement préalable de la charge, tout en limitant les problèmes de contamination du catalyseur liés à l'origine de la charge et à la formation de co-produits nuisibles tels que l'eau et les oxydes de carbone.

### Description de l'invention

La présente invention est relative à la préparation de bases carburants correspondant aux nouvelles normes environnementales, à partir de charges issues de sources bio-renouvelables par hydrotraitement et/ou hydroconversion en lit bouillonnant. Plus précisément, la présente invention a trait à un procédé de traitement d'une charge d'origine bio-renouvelable contenant des structures triglycérides et/ou acides gras et dont les chaînes grasses possèdent un nombre de carbone compris entre 8 et 25, ledit procédé comprenant les étapes suivantes:
a) hydrotraitement et/ou hydroconversion de ladite charge bio-renouvelable dans un réacteur en lit bouillonnant en présence d'un catalyseur granulaire (grains, billes, extrudés) comprenant sur un support amorphe au moins un métal ou composé de métal ayant une fonction hydro-déshydrogénante, pour produire un premier effluent, ledit support étant un support minéral amorphe choisi dans le groupe formé par l'alumine, la silice, les silices-alumines, la magnésie, les argiles et les mélanges d'au moins deux de ces minéraux, ledit support renfermant au moins un dopant qui est l'anhydride phosphorique.
b) envoi de l'effluent produit à l'étape a) dans une zone de distillation à partir de laquelle on récupère une fraction gazeuse, et au moins une coupe distillat dont la température finale d'ébullition est inférieure à 400°C.

Les charges de départ sont issues de sources renouvelables, telles que les huiles végétales et graisses animales, ou des mélanges de telles charges. On peut citer par exemple les huiles de colza, de soja, de tournesol, de palme, de palmiste, d'olive, de coprah, de ricin et de coton, les huiles d'arachide, de lin et de crambe, de Purghères (de jatropha). Cette liste non limitative inclut également toutes les huiles obtenues par modification génétique ou hybridation. Les huiles de friture, ainsi que toutes les huiles et graisses issues des industries de restauration, peuvent également être utilisées. Les graisses animales comme par exemple les huiles de poisson, le suif, le saindoux, font également partie des charges utilisées pour la présente invention. Le présent procédé s'applique à tous types d'huiles végétales ou de graisses animales. Les charges ainsi définies contiennent des structures triglycérides et/ou acides gras, dont les chaînes grasses possèdent un nombre de carbone généralement compris entre 8 et 25.

Les charges peuvent contenir des phospholipides jusqu'à 5% poids, des acides gras libres jusqu'à 5% poids, des insaponifiables jusqu'à 5% poids tels que les stérols, les alcools triterpènes, des vitamines jusqu'à 1% telles que des tocophérols, des composés colorés jusqu'à 100 ppm tels que des carotènoïdes, différents métaux et minéraux jusqu'à 200 ppm, des composés soufrés jusqu'à des teneurs de l'ordre de 2000 ppm, et des composés azotés jusqu'à des teneurs de 2% poids.

Les densités à 15°C de ces huiles sont comprises entre 850 et 970 kg/m³ et leur viscosités cinématiques à 40°C sont comprises entre 20 et 400 mm²/s, plus généralement entre 30 et 50 mm²/s. Ces charges ont des teneurs en aromatiques faibles, généralement inférieures à 5% poids.

### Description de l'étape a/ d'hydrotraitement / hydroconversion

Les conditions de l'étape a) de traitement de la charge en présence d'hydrogène sont proches des conditions classiques d'hydroconversion en lit bouillonnant d'une fraction hydrocarbonée liquide. On peut utiliser un catalyseur granulaire classique d'hydrotraitement et/ou d'hydroconversion comprenant sur un support amorphe au moins un métal ou composé de métal ayant une fonction hydro-déshydrogénante. Ce catalyseur est avantageusement un catalyseur comprenant au moins un métal du groupe VIII, de préférence du nickel et/ou du cobalt, le plus souvent en association avec au moins un métal du groupe VIB, de préférence du molybdène et/ou du tungstène. Le catalyseur ne contient pas d'éléments des groupes IIA et IIB (par ex Zn, Mg ou Ca). On emploiera par exemple un catalyseur comprenant (ou avantageusement constitué de) 0,5 à 10 % en poids de nickel et de préférence de 1 à 5 % en poids de nickel (exprimé en oxyde de nickel NiO) et de 1 à 30 % en poids de molybdène, de préférence de 5 à 20 % en poids de molybdène (exprimé en oxyde de molybdène MoO₃) sur un support minéral amorphe. Ce support sera choisi dans le groupe formé par l'alumine, la silice, les silices-alumines, la magnésie, les argiles et les mélanges d'au moins deux de ces minéraux. ce support renferme au moins un dopant qui est l'anhydride phosphorique. On utilise le plus souvent un support d'alumine dopée avec du phosphore et éventuellement du bore. La concentration en anhydride phosphorique P₂O₅ est habituellement d'au plus 10% poids. La concentration en trioxyde de bore B₂O₃ est habituellement comprise entre 0 et environ 10 % en poids. L'alumine utilisée est habituellement une alumine γ ou η Ce catalyseur est le plus souvent sous forme d'extrudés. La teneur totale en oxydes de métaux des groupes VI et VIII est souvent d'environ 5 à environ 40 % en poids et en général d'environ 7 à 30 % en poids et le rapport pondéral exprimé en oxyde métallique entre métal (ou métaux) du groupe VI sur métal (ou métaux) du groupe VIII est en général d'environ 20 à environ 1 et le plus souvent d'environ 10 à environ 2.

Le catalyseur usagé est en partie remplacé par du catalyseur frais par soutirage en bas du réacteur et introduction en haut de réacteur de catalyseur frais ou neuf à intervalles de temps réguliers c'est-à-dire par bouffée ou de façon quasi continue. On peut par exemple introduire du catalyseur frais tous les jours. Le taux de remplacement du catalyseur usé par du catalyseur frais peut varier d'environ 0,01 kilogramme à environ 10 kilogrammes par mètre cube de charge, de préférence entre 0,3 et 3 kilogramme par mètre cube de charge. Ce soutirage et ce remplacement sont effectués à l'aide de dispositifs permettant le fonctionnement continu de cette étape d'hydrotraitement/ hydroconversion. L'unité comporte habituellement une pompe de recirculation permettant le maintien du catalyseur en lit bouillonnant par recyclage continu d'au moins une partie du liquide soutiré en tête du réacteur et réinjecté en bas de réacteur. Il est également possible d'envoyer le catalyseur usé soutiré du réacteur dans une zone de régénération dans laquelle on élimine le carbone et les impuretés qu'il renferme puis de renvoyer ce catalyseur régénéré dans l'étape d'hydrotraitement convertissant.

Le plus souvent cette étape a) est mise en oeuvre dans les conditions du procédé H-OiIDC^{®} tel que décrit par exemple dans l'article Heavy Oil Hydroprocessing, publié par l'Aiche, March 19-23, 1995, HOUSTON, Texas, paper number 42d. Le principe de cette technologie est également bien décrite dans le brevet US 6,436,279. En particulier, il est décrit qu'un mélange de liquide et d'hydrogène traverse du bas vers le haut un lit de catalyseur à une vitesse telle que les particules de catalyseur se mettent en mouvement. Il y a expansion de la hauteur du lit par rapport à sa hauteur au repos. Le taux d'expansion est défini comme suit:
taux d'expansion=100. (hauteur du lit ébullé-hauteur du lit au repos) / hauteur du lit au repos
L'ébullition du lit de catalyseur est contrôlée par le débit de recyclage d'une partie de la charge convertie. Ce liquide servant à l'ébullition du lit peut être obtenu par séparation dans un séparateur haute pression ou en fond d'une colonne atmosphérique. On définit le taux de recyclage d'ébullition comme le rapport du débit horaire de liquide recyclé sur le débit horaire de charge fraîche entrant dans le réacteur. On opère habituellement avec un taux de recyclage compris entre 2 et 10. Le taux d'expansion du lit correspondant est alors compris entre 10 et 50%. Selon la présente invention dont un des objectifs est de produire des bases carburants de bonne qualité, on préfère utiliser un taux de recyclage compris entre 0,67 et 1,5 et un taux d'expansion compris entre 15 et 25%.

On opère habituellement sous une pression absolue 2 à 35 MPa, souvent de 2 à 15 MPa et le plus souvent de 3 à 10 MPa, à une température d'environ 200 à environ 450°C, et le plus souvent d'environ 250 à environ 380°C. La vitesse spatiale horaire (WH) et la pression partielle d'hydrogène sont des facteurs importants que l'on choisit en fonction des caractéristiques du produit à traiter et de la conversion souhaitée. L'association conversion / température / pression sera choisie de façon à obtenir le meilleur compromis conversion / qualité des produits.

Le plus souvent la VVH se situe dans une gamme allant d'environ 0,1 h⁻¹ à environ 10 h⁻¹ et de préférence environ 0,5 h⁻¹ à environ 5 h⁻¹. La quantité d'hydrogène mélangée à la charge est habituellement d'environ 50 à environ 5000 normaux mètres cube (Nm³) par mètre cube (m³) de charge liquide et le plus souvent d'environ 100 à environ 1000 Nm³/m³ et de préférence d'environ 200 à environ 500 Nm³/m³.

### Description étape b)

Dans une forme courante de mise en oeuvre de l'invention l'effluent obtenu à l'étape a) est au moins en partie, et souvent en totalité, envoyé dans une zone de distillation (étape b) à partir de laquelle on récupère habituellement une fraction gazeuse et au moins une coupe distillat dont la température finale d'ébullition est inférieure à 400°C. La coupe distillat est peut ainsi être envoyée directement aux pools carburants. Lors de la mise en oeuvre du procédé de l'invention, la base kérosène obtenue après la mise en oeuvre de l'étape b) présente généralement les caractéristiques présentées dans le tableau 1:

**tableau 1**

| Caractéristique | Base kérosène |
|---|---|
| intervalle de distillation (°C) | 130 - 280 |
| Masse volumique (kg/m³) | 760 - 770 |
| Cétane (ASTM D613) | > 45 |
| Point de fumée (ASTM D1322) (mm) | > 25 |
| Polyaromatiques (% pds) | < 1 |
| Soufre (ppm pds) | < 1 |
| Couleur Saybolt (ASTM D156) | > 20 |
| Point de disparition des cristaux (ASTM D 2386) (°C) | < -47 |
| Stabilité thermique à 260°C | < 25 |
| (JFTOT ASTM D3241) | |
| (mm Hg) | |
| Cotation tube (visuel) | < 3 |

De bonnes caractéristiques sont obtenues, entre autres, pour le point de fumée et la stabilité thermique.

En ce qui concerne la base gazole obtenue après la mise en oeuvre de l'étape b), celle-ci présente généralement les caractéristiques présentées dans le tableau 2:

| Caractéristique | Base gazole |
|---|---|
| intervalle de distillation | 180 - 400°C |
| Masse volumique (kg/m³) | 775 - 785 |
| Cétane (ASTM D613) | > 70 |
| Polyaromatiques (% pds) | < 1 |
| Soufre (ppm pds) | < 1 |
| Couleur (ASTM D1500) | < 0,5 |
| Point d'écoulement (ASTM D97) (°C) | -5 à -30 |
| Stabilité au stockage (ASTM D2274) (mg/l) | < 10 |

De bonnes caractéristiques sont obtenues, entre autres, pour l'indice de cétane et la stabilité au stockage.

### Exemples

### Exemple 1 (non conforme)

Une huile de colza raffinée contenant 5 ppm de P et 5 ppm de Ca est traitée en lit bouillonnant dans un réacteur de type pilote "Robinson-Mahoney". Le volume de catalyseur utilisé est de 100 cm³ (0,1 m³) pour un débit de charge de 100 cm³/h. Le catalyseur mis en oeuvre contient 4% poids de nickel (exprimé sous forme oxyde NiO) et 21 % poids de molybdène (exprimé sous forme oxyde MoO₃) sur un support alumine. Le réacteur en lit bouillonnant est opéré à une pression de 5 MPa et à une température de 350°C.

Selon ces conditions, la conversion initiale en triglycérides est de 100% poids et celle après 1500 heures de fonctionnement est de 90% poids. Après 1500 heures de fonctionnement, la teneur en coke mesurée sur le catalyseur est de 4% poids.

### Exemple 2 (non conforme)

La même charge que celle utilisée pour l'exemple 1 est traitée dans un réacteur de type lit fixe contenant un catalyseur sous forme d'extrudés sur support alumine ayant la même composition que celui utilisé dans l'exemple 1.
Le réacteur en lit fixe est opéré à une pression de 5 MPa et à une température de 350°C.

Selon ces conditions, la conversion initiale en triglycérides est de 100% poids et celle après 1500 heures de fonctionnement est de 80% poids. Après 1500 heures de fonctionnement, la teneur en coke mesurée sur le catalyseur est de 7% poids.

### Exempte 3 (non conforme)

Une huile de colza peu raffinée contenant 180 ppm de P et 150 ppm de Ca est traitée en lit bouillonnant dans un réacteur de type pilote "Robinson-Mahoney". Le volume de catalyseur utilisé est de 100 cm³ pour un débit de charge de 100 cm³/h. Le catalyseur mis en oeuvre contient 4 % poids de nickel (exprimée sous forme oxyde NiO) et 21 % poids de molybdène (exprimée sous forme oxyde MoOₛ) sur un support alumine. Le réacteur en lit bouillonnant est opéré à une pression de 5 MPa et à une température de 350°C.

Selon ces conditions, la conversion initiale en triglycérides est de 100% poids et celle après 1500 heures de fonctionnement est de 80% poids. Après 1500 heures de fonctionnement, la teneur en coke mesurée sur le catalyseur est de 5% poids.

### Exemple 4 (non conforme)

La même charge que celle utilisée pour exemple 3 est traitée dans un réacteur de type lit fixe contenant un catalyseur sous forme d'extrudés sur support alumine ayant la même que celui utilisé dans l'exemple 3.Le réacteur en lit fixe est opéré à une pression de 5 MPa et à une température de 350°C.

Selon ces conditions, la conversion initiale en triglycérides est de 100% poids et celle après 1500 heures de fonctionnement est de 50% poids. Après 1500 heures de fonctionnement, la teneur en coke mesurée sur le catalyseur est de 10% poids.

Les exemples illustrent les avantages obtenus par une mise en oeuvre en lit bouillonnant par rapport à celle en lit fixe. Ainsi, il est possible d'obtenir une conversion après 1500 heures notamment meilleure tout en ayant un empoissonnement du catalyseur par le coke moindre. Par ailleurs, la qualité de la coupe gazole obtenue par le procédé en lit bouillonnant, est équivalente à celle obtenue selon le procédé en lit fixe, en particulier l'indice de cétane (> 70) et la densité à 15°C (comprise dans la fourchette 775 - 785 kg/m³).

## Revendications

1. Procédé d'hydrotraitement et/ou d'hydroconversion d'une charge d'origine bio-renouvelable contenant des structures triglycérides et/ou acides gras et dont les chaînes grasses possèdent un nombre de carbone compris entre 8 et 25, ledit procédé comprenant les étapes suivantes:
a) hydrotraitement et/ou hydroconversion de ladite charge bio-renouvelable dans un réacteur en lit bouillonnant en présence d'un catalyseur granulaire comprenant sur un support amorphe au moins un métal ou composé de métal ayant une fonction hydro-déshydrogénante, pour produire un premier effluent, ledit support étant un support minéral amorphe choisi dans le groupe formé par l'alumine, la silice, les silices-alumines, la magnésie, les argiles et les mélanges d'au moins deux de ces minéraux, ledit support renfermant au moins un dopant qui est l'anhydride phosphorique.
b) envoi de l'effluent produit à l'étape a) dans une zone de distillation à partir de laquelle on récupère une fraction gazeuse, et au moins une coupe distillat dont la température finale d'ébullition est inférieure à 400°C.

2. Procédé selon la revendication 1 dans lequel ledit catalyseur mis en oeuvre à l'étape a) comprend au moins un métal du groupe VIII.

3. Procédé selon la revendication 2 dans lequel ledit métal du groupe VIII du catalyseur mis en oeuvre à l'étape a) est choisi parmi le nickel et le cobalt.

4. Procédé selon l'une des revendications 1 à 3 dans lequel ledit catalyseur ne contient pas de Zn, Mg ou Ca.

5. Procédé selon l'une des revendications 1 à 4 dans lequel ledit catalyseur mis en oeuvre à l'étape a) comprend au moins un métal du groupe VIII en association avec au moins un métal du groupe VIB.

6. Procédé selon la revendication 5 dans lequel ledit métal du groupe VIB est choisi parmi le molybdène et le tungstène.

7. Procédé selon l'une des revendications 1 à 6 dans lequel ledit catalyseur mis en oeuvre à l'étape a) comprend de 0,5 à 10% poids de nickel et de 1 à 30% poids de molybdène.

8. Procédé selon la revendication 1 à 7 dans lequel le support minéral amorphe est un support d'alumine dopée avec du phosphore.

9. Procédé selon l'une des revendications précédentes dans lequel l'étape a) est opérée sous une pression absolue de 2 à 35 MPa, à une température comprise entre 200 et 450°C, à une vitesse spatiale horaire comprise entre 0,1 et 10 h⁻¹ avec une quantité d'hydrogène mélangée à la charge comprise entre 50 et 5000 Nm³/m³ de charge liquide.

10. Procédé selon la revendication 9 dans lequel l'étape a) est opérée sous une pression absolue de 3 à 10 MPa, à une température comprise entre 250 et 380°C, à une vitesse spatiale horaire comprise entre 0,5 et 5 h⁻¹ avec une quantité d'hydrogène mélangée à la charge comprise entre 200 et 500 Nm³/m³ de charge liquide.

11. Procédé selon l'une quelconque des revendications précédentes dans lequel ledit réacteur en lit bouillonnant de l'étape a) est opéré de telle façon que le taux d'expansion du lit de catalyseur est compris entre 10 et 50%.

12. Procédé selon la revendication 11 dans lequel ledit réacteur en lit bouillonnant de l'étape a) est opéré de telle façon que le taux d'expansion du lit de catalyseur est compris entre 15 et 25%.

13. Procédé selon l'une quelconque des revendications précédentes dans lequel ladite charge d'origine bio-renouvelable est de type huile végétale.

14. Procédé selon l'une quelconque des revendications précédentes dans lequel ladite charge d'origine bio-renouvelable est de type graisse animale.

## Claims

1. A process for hydrotreatment and/or hydroconversion of a feed of bio-renewable origin containing triglyceride and/or fatty acid structures and wherein the fatty chains contain in the range 8 to 25 carbon atoms, said process comprising the following steps:
a) hydrotreatment and/or hydroconversion of said bio-renewable feed in an ebullated bed reactor in the presence of a granular catalyst comprising, on an amorphous support, at least one metal or compound of a metal having a hydrodehydrogenating function, to produce a first effluent, said support being an amorphous mineral support selected from the group formed by alumina, silica, silica-aluminas, magnesia, clays and mixtures of at least two of said minerals, said support includes at least one dopant which is phosphoric anhydride.
b) sending the effluent produced in step a) to a distillation zone from which a gaseous fraction and at least one distillate cut the end point of which is less than 400°C are recovered.

2. A process according to claim 1, in which said catalyst employed in step a) comprises at least one group VIII metal.

3. A process according to claim 2, in which said group VIII metal of the catalyst employed in step a) is selected from nickel and cobalt.

4. A process according to one of claims 1 to 3, in which said catalyst contains no Zn, Mg or Ca.

5. A process according to one of claims 1 to 4, in which said catalyst employed in step a) comprises at least one metal from group VIII in combination with at least one metal from group VIB.

6. A process according to claim 5, in which said metal from group VIB is selected from molybdenum and tungsten.

7. A process according to one of claims 1 to 6, in which said catalyst employed in step a) comprises 0.5% to 10% by weight of nickel and 1% to 30% by weight of molybdenum.

8. A process according to claims 1 to 7, in which the amorphous mineral support is an alumina support doped with phosphorus.

9. A process according to one of the preceding claims, in which step a) is operated at an absolute pressure of 2 to 35 MPa, at a temperature in the range 200°C to 450°C, at an hourly space velocity in the range 0.1 to 10 h⁻¹ and with a quantity of hydrogen mixed with the feed in the range 50 to 5000 Nm³/m³ of liquid feed.

10. A process according to claim 9, in which step a) is operated at an absolute pressure of 3 to 10 MPa, at a temperature in the range 250°C to 380°C, at an hourly space velocity in the range 0.5 to 5 h⁻¹ and with a quantity of hydrogen mixed with the feed in the range 200 to 500 Nm³/m³ of liquid feed.

11. A process according to any one of the preceding claims, in which said ebullated bed reactor of step a) is operated in such a manner that the degree of expansion of the catalyst bed is in the range 10% to 50%.

12. A process according to claim 11, in which said ebullated bed reactor of step a) is operated in such a manner that the degree of expansion of the catalyst bed is in the range 15% to 25%.

13. A process according to any one of the preceding claims, in which said feed of bio-renewable origin is of the vegetable oil type.

14. A process according to any one of the preceding claims, in which said feed of bio-renewable origin is of the animal fat type.

## Patentansprüche

1. Verfahren zur hydrierenden Behandlung und/oder hydrierenden Umwandlung eines Charge erneuerbaren Ursprungs, die Triglyceridund/oder Fettsäurestrukturen enthält und deren Fettketten eine Kohlenstoffzahl aufweisen, die zwischen 8 und 25 liegt, wobei das Verfahren die folgenden Schritte umfasst:
a) Hydrierende Behandlung und/oder hydrierende Umwandlung des erneuerbaren Charge in einem Blasenbettreaktor in Gegenwart eines körnigen Katalysators, der auf einer amorphen Träger- substanz mindestens ein Metall oder eine Metallverbindung um- fasst, das bzw. die eine Hydrierungs-/Dehydrierungsfunktion auf- weist, zum Produzieren eines ersten Abstroms, wobei es sich bei der Trägersubstanz um eine amorphe mineralische Träger- substanz handelt, die aus der Gruppe bestehend aus Aluminium- oxid, Siliciumdioxid, Siliciumdioxiden/Aluminiumoxiden, Magnesiumoxid, Tonen und Gemischen von mindestens zwei dieser Mineralien ausgewählt ist, wobei die Trägersubstanz mindestens ein Dotierungsmittel einschließt, bei dem es sich um Phosphorsäureanhydrid handelt;
b) Beförderung des in Schritt a) produzierten Abstroms in eine Destillationszone, aus der eine Gasfraktion und mindestens ein Destillatschnitt, dessen Siedeende unter 400 °C liegt, zurückge- wonnen werden.

2. Verfahren nach Anspruch 1, wobei der in Schritt a) eingesetzte Katalysator mindestens ein Metall der Gruppe VIII umfasst.

3. Verfahren nach Anspruch 2, wobei das Metall der Gruppe VIII des in Schritt a) eingesetzten Katalysators aus Nickel und Kobalt ausgewählt ist.

4. Verfahren nach einem der Ansprüche 1 bis 3, wobei der Katalysator kein Zn, Mg oder Ca enthält.

5. Verfahren nach einem der Ansprüche 1 bis 4, wobei der in Schritt a) eingesetzte Katalysator mindestens ein Metall der Gruppe VIII in Verbindung mit mindestens einem Metall der Gruppe VIB umfasst.

6. Verfahren nach Anspruch 5, wobei das Metall der Gruppe VIB aus Molybdän und Wolfraum ausgewählt ist.

7. Verfahren nach einem der Ansprüche 1 bis 6, wobei der in Schritt a) eingesetzte Katalysator 0,5 bis 10 Gew.-% Nickel und 1 bis 30 Gew.-% Molybdän umfasst.

8. Verfahren nach den Ansprüchen 1 bis 7, wobei es sich bei der amorphen mineralischen Trägersubstanz um eine mit Phosphor dotierte Aluminiumoxidträgersubstanz handelt.

9. Verfahren nach einem der vorhergehenden Ansprüche, wobei Schritt a) unter einem Absolutdruck von 2 bis 35 MPa, bei einer Temperatur zwischen 200 und 450 °C und einer stündlichen Raumgeschwindigkeit zwischen 0,1 und 10 h⁻¹ mit einer mit dem Einsatzgut gemischten Wasserstoffmenge zwischen 50 und 5000 Nm³/m³ des flüssigen Einsatzguts betrieben wird.

10. Verfahren nach Anspruch 9, wobei Schritt a) unter einem Absolutdruck von 3 bis 10 MPa, bei einer Temperatur zwischen 250 und 380 °C und einer stündlichen Raumgeschwindigkeit zwischen 0,5 und 5 h⁻¹ mit einer mit dem Einsatzgut gemischten Wasserstoffmenge zwischen 200 und 500 Nm³/m³ des flüssigen Einsatzguts betrieben wird.

11. Verfahren nach einem der vorhergehenden Ansprüche, wobei der Blasenbettreaktor von Schritt a) derart betrieben wird, dass der Ausdehnungsgrad des Katalysatorbetts zwischen 10 und 50 % liegt.

12. Verfahren nach Anspruch 11, wobei der Blasenbettreaktor von Schritt a) derart betrieben wird, dass der Ausdehnungsgrad des Katalysatorbetts zwischen 15 und 25 % liegt.

13. Verfahren nach einem der vorhergehenden Ansprüche, wobei die Charge erneuerbaren Ursprungs vom Pflanzenöltyp ist.

14. Verfahren nach einem der vorhergehenden Ansprüche, wobei die Charge erneuerbaren Ursprungs vom Tierfetttyp ist.
